# EUROPEAN PATENT APPLICATION

(11) **EP 4 667 400 A1**
(43) Date of publication of application: **24.12.2025**
(21) Application number: 23931052.7
(22) Date of filing: 10.11.2023
(51) Int. Cl.: B65H 27/00, B65H 20/02

(54) **PARTIALLY-REPLACEABLE RUBBER ROLL**

(30) Priority: 30.03.2023 KR 20230042367; 18.05.2023 KR 20230064625; 08.06.2023 KR 20230073635
(71) Applicant: Lee, Sang Kyu, Seo-gu, Daejeon 35218 (KR)
(72) Inventor: Lee, Sang Kyu, Seo-gu, Daejeon 35218 (KR)
(74) Representative: Isarpatent
(86) International application number: PCT/KR2023/018078
(87) International publication number: WO 2024/204942

(57) **Abstract**

The present invention provides a partially replaceable rubber roll capable of significantly improving productivity through mass production of split rolls, reducing weight by thinning, enhancing bonding strength with a rubber layer, maintaining weight balance, and preventing eccentricity or vibration.

The partially replaceable rubber roll comprises a core forming a rotation shaft, a plurality of split rolls, each formed in a semi-cylindrical shape so as to cover the core in an upper and lower divided manner, the split rolls being formed in a short length so as to cover an entire length of the core in multiple sections, and a plurality of rubber covers respectively surrounding outer circumferential surfaces of the split rolls and integrally combined and fixed thereto.

Each of the split rolls comprises a semi-cylindrical body and flanges formed to protrude outward by a predetermined width along opposite longitudinal edges of the body, wherein each flange is formed with a pair of fastening holes spaced apart in a longitudinal direction and configured to allow penetration and fastening by fastening members.

## Description

### BACKGROUND OF THE INVENTION

### Technical Field

The present invention relates to a partially replaceable rubber roll, and more particularly, to a partially replaceable rubber roll capable of improving productivity, reducing weight through trimming, balancing the weight distribution, and preventing eccentricity and vibration.

### Description of the Related Art

In general, rubber rolls are often used in the process of manufacturing cardboard, synthetic resin films, metal plates, and the like, in order to guide the smooth transfer of raw materials and products.

A rubber roll is composed of a core, which is made of metal and serves as a center during rotation, and a rubber layer that is formed with a predetermined thickness on the outer surface of the core. The outer surface of the rubber layer is subjected to post-treatment (such as coating treatment) so as to maintain a certain strength.

The conveying rubber roll generally has a length of approximately 1 to 3 meters. A plurality of such rolls may press and convey the object to be transferred, or the object may be conveyed while maintaining a tensile force along the outer periphery of a single rubber roll.

The rubber roll also functions as a cushion by partially absorbing the external pressure applied to the conveyed object due to the elasticity of the roll itself.

Various technologies related to rubber rolls with different structures have been disclosed in Korean Registered Patent Nos. 10-1406147, 10-1544743, 10-1899438, and the like.

In conventional rubber rolls, as the rubber layer becomes worn out after a certain period of use, replacement becomes necessary. During such replacement, the entire rubber roll must be separated from the production facility in order to carry out replacement of the rubber layer and re-coating of the outer surface of the rubber layer. This leads to difficulties in operation and requires a long processing time.

In addition, conventional rubber rolls are subject to sagging in the central portion due to their own weight, which results in non-uniform wear of the rubber layer. Consequently, the entire rubber roll has to be replaced, leading to the generation of a large amount of waste.

Furthermore, various technologies related to partially replaceable rubber rolls have been disclosed in Korean Published Patent Application No. 10-2022-0088048, Korean Registered Patent Nos. 10-1375129, 10-1419714, and the like.

In such partially replaceable rubber rolls, the configuration with machined parts makes it difficult to maximize productivity. In addition, the split rolls forming the frame are thick and heavy, which results in an increase in the overall weight. Furthermore, the rubber layer may be lifted, and the overall weight balance may be adversely affected due to the presence of fastening bolts or similar elements.

### SUMMARY OF THE INVENTION

The present invention has been devised in view of the above-described circumstances, and it is an object of the invention to provide a partially replaceable rubber roll in which the number of parts is reduced, the weight of the split rolls is decreased, the bonding strength with the rubber layer is enhanced, the weight balance can be maintained, and eccentricity or vibration can be prevented.

According to an embodiment of the present invention, a partially replaceable rubber roll comprises a core forming a rotation shaft, a plurality of split rolls, each formed in a semi-cylindrical shape so as to cover the core in an upper and lower divided manner, the split rolls being formed in a short length so as to cover an entire length of the core in multiple sections, and a plurality of rubber covers respectively surrounding outer circumferential surfaces of the split rolls and integrally combined and fixed thereto.

Each of the split rolls comprises a semi-cylindrical body and flanges formed to protrude outward by a predetermined width at opposite edges of the body.

Each flange being formed with a pair of fastening holes spaced apart in a longitudinal direction and configured to allow penetration and fastening by fastening members.

The fastening holes formed in one of the opposite flanges are female-threaded holes.

An inner circumferential surface of each rubber cover is formed in a shape corresponding to the outer circumferential surface of the split roll.

Each rubber cover is formed with fastening guide holes configured to receive fastening members toward fastening holes of the divided roll, the fastening guide holes being formed at positions corresponding to fastening holes provided in the other flange.

According to the partially replaceable rubber roll of an embodiment of the present invention, since a plurality of split rolls and rubber covers are assembled and fastened to the core to manufacture the rubber roll, it is possible to partially replace the rubber roll when the rubber roll becomes worn or damaged.

According to the partially replaceable rubber roll of an embodiment of the present invention, since the rubber roll can be manufactured using an assembly of split rolls and rubber covers having a single structure, component manufacturing is facilitated, and productivity can be improved and manufacturing costs can be reduced.

According to the partially replaceable rubber roll of an embodiment of the present invention, since a plurality of reinforcing protrusions are formed on the split roll, it is possible not only to reduce the weight by thinning a portion of the split roll but also to increase the bonding strength with the rubber cover and prevent the rubber cover from lifting as a result of forming the reinforcing protrusions.

According to the partially replaceable rubber roll of an embodiment of the present invention, since the fastening members are fastened to female-threaded holes formed in fastening holes of the split rolls, nuts need not be used separately, and the heads of the fastening members are also symmetrically arranged, thereby facilitating overall weight balancing and preventing eccentricity and vibration.

According to the partially replaceable rubber roll of an embodiment of the present invention, since the split rolls can be manufactured by extrusion or drawing processes, productivity can be significantly improved compared with the conventional case of manufacturing by machining.

### BRIEF DESCRIPTION OF THE DRAWINGS

FIG. 1 is a perspective view showing a partially replaceable rubber roll according to an embodiment of the present invention.
FIG. 2 is a rear perspective view showing a partially replaceable rubber roll according to an embodiment.
FIG. 3 is a rear perspective view showing a partially disassembled state of a partially replaceable rubber roll according to an embodiment.
FIG. 4 is a longitudinal sectional view showing a partially replaceable rubber roll according to an embodiment.
FIG. 5 is a cross-sectional view showing a partially replaceable rubber roll according to an embodiment.
FIG. 6 is a longitudinal sectional view showing a partially replaceable rubber roll in which coupling protrusions are formed on the split rolls according to an embodiment.
FIG. 7 is a bottom perspective view showing a partially replaceable rubber roll in which coupling protrusions are formed on the split rolls according to an embodiment.
FIG. 8 is a perspective view showing an assembly of split rolls and rubber covers in a partially replaceable rubber roll according to an embodiment.
FIG. 9 is a bottom perspective view showing an assembly of split rolls and rubber covers in a partially replaceable rubber roll according to an embodiment.
FIG. 10 is an exploded perspective view showing split rolls and rubber covers in a partially replaceable rubber roll according to an embodiment.
FIG. 11 is a cross-sectional view showing an assembly of split rolls and rubber covers in a partially replaceable rubber roll according to an embodiment.
FIG. 12 is a longitudinal sectional view showing an assembly of split rolls and rubber covers in a partially replaceable rubber roll according to an embodiment.
FIG. 13 is an enlarged longitudinal sectional view showing a portion of a split roll in a partially replaceable rubber roll according to an embodiment.
FIG. 14 is a perspective view showing another example of a split roll in a partially replaceable rubber roll according to an embodiment.
FIG. 15 is a cross-sectional view showing another example of a split roll in a partially replaceable rubber roll according to an embodiment.
FIG. 16 is a perspective view showing another example of a rubber cover in a partially replaceable rubber roll according to an embodiment.
FIG. 17 is a longitudinal sectional view showing another example of a rubber cover in a partially replaceable rubber roll according to an embodiment.
FIG. 18 is a bottom perspective view showing another example of a rubber cover in a partially replaceable rubber roll according to an embodiment.
FIG. 19 is a perspective view showing a rubber cover with a groove formed therein in a partially replaceable rubber roll according to an embodiment.
FIG. 20 is a perspective view of a rubber cover with a groove formed therein in a partially replaceable rubber roll according to an embodiment.
FIG. 21 is a bottom perspective view of a rubber cover with a groove formed therein in a partially replaceable rubber roll according to an embodiment.
FIG. 22 is a longitudinal sectional view of a rubber cover with a groove formed therein in a partially replaceable rubber roll according to an embodiment.
FIG. 23 is a longitudinal sectional view of a rubber cover with another type of groove formed therein in a partially replaceable rubber roll according to an embodiment.
FIG. 24 is a longitudinal sectional view showing a state in which a spacer is installed between an assembly of split rolls and rubber covers in a partially replaceable rubber roll according to an embodiment.
FIG. 25 is a perspective view showing a partially replaceable rubber roll according to another embodiment.
FIG. 26 is a bottom perspective view showing a partially replaceable rubber roll according to another embodiment.
FIG. 27 is a plan view showing an assembly of split rolls and rubber covers in which different examples of fastening holes and fastening guide holes are formed in a partially replaceable rubber roll according to another embodiment.
FIG. 28 is a cross-sectional view showing a partially replaceable rubber roll according to still another embodiment.
FIG. 29 is a longitudinal sectional view showing a partially replaceable rubber roll according to still another embodiment.

### DETAILED DESCRIPTION OF THE INVENTION

Next, preferred embodiments of the partially replaceable rubber roll according to the present invention will be described in detail with reference to the drawings.

The present invention can be implemented in various different forms and is not limited to the embodiments described below.

For clarity of description, parts that are not directly related to the invention are omitted, and the same or similar components are denoted by the same reference numerals throughout the entire description of the invention, with repetitive explanations omitted.

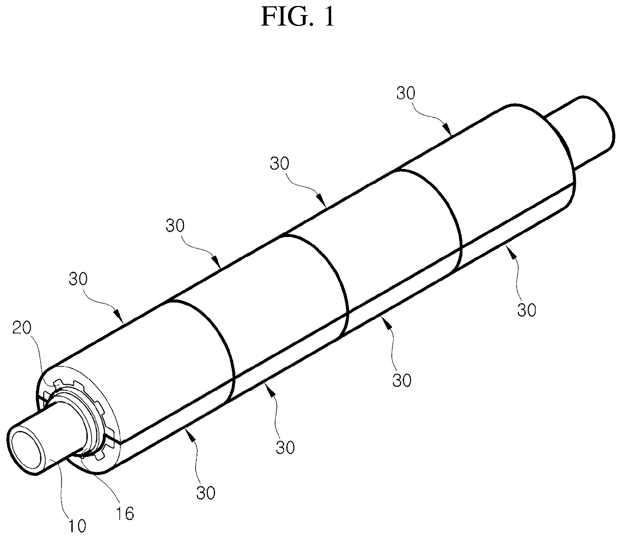

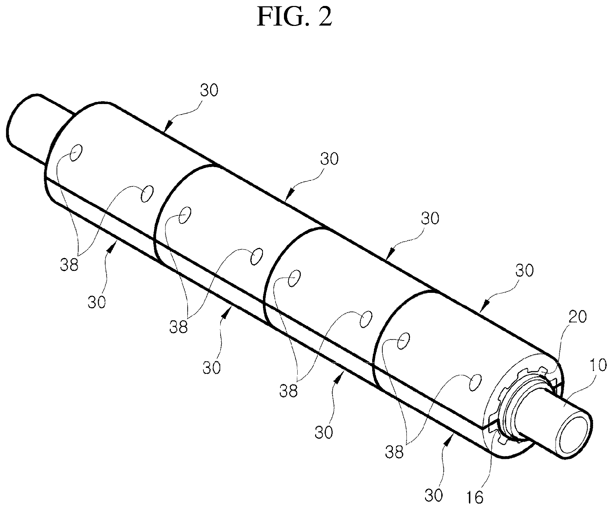

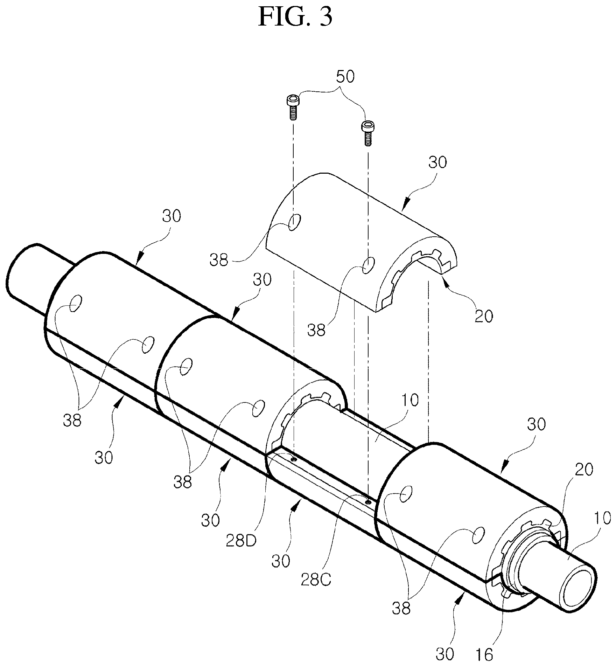

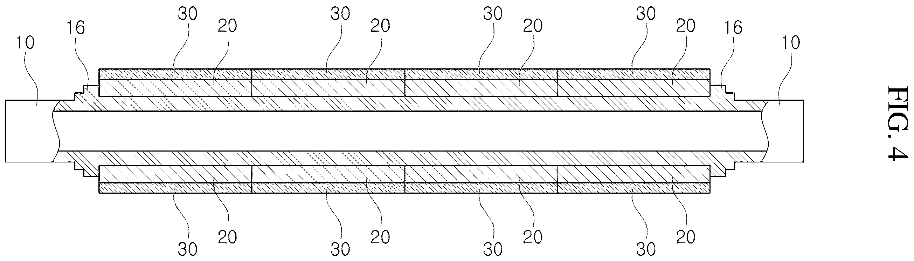

First, as shown in FIGS. 1 to 5, a partially replaceable rubber roll according to one embodiment of the invention comprises a core (10), a plurality of split rolls (20), and rubber covers (30).

The core (10) forms a rotation shaft.

The core (10) may be formed as a hollow shaft or may be formed in a cylindrical shape.

The core (10) may be further provided with roll assembly projections (16) protruding therefrom to define regions where the split rolls (20) are installed and to maintain their fixed positions.

When such roll assembly projections (16) are provided, it is possible to prevent the assembled split rolls (20) from moving in the longitudinal direction of the core (10).

The split rolls (20) are formed in a semi-cylindrical shape so as to cover the core (10) in an up-and-down divided manner along the longitudinal direction and to be coupled to each other.

The split rolls (20) are formed in short lengths so as to cover the entire length of the core (10) by dividing it into a plurality of sections.

By forming the split rolls (20) in short lengths divided along the length of the core (10), it becomes possible to replace them partially as needed.

The split rolls (20) may be manufactured by extrusion, drawing, casting, or injection molding.

When the split rolls (20) are manufactured by extrusion or drawing as described above, productivity can be greatly improved compared with conventional machining.

The split rolls (20) may also be manufactured by machining after being primarily formed by extrusion, drawing, casting, or injection molding.

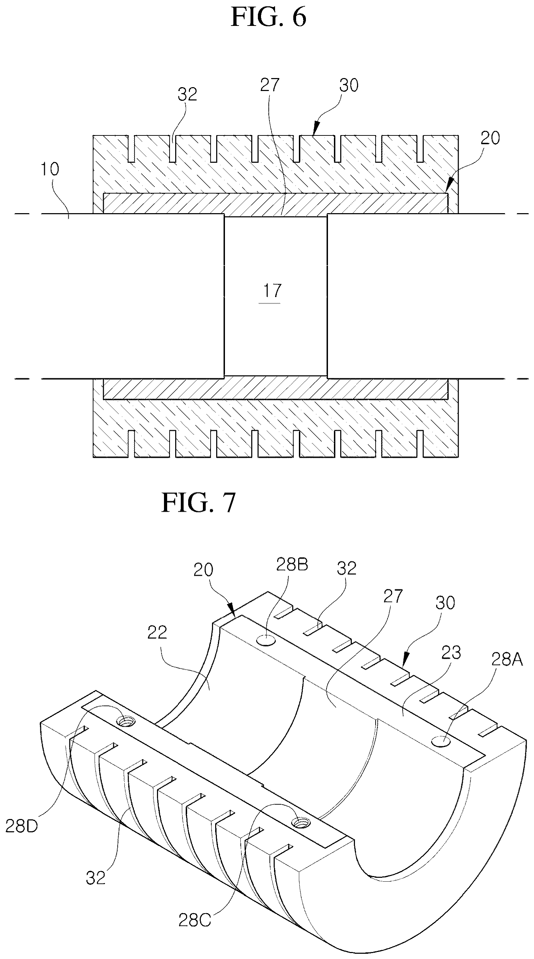

As shown in FIGS. 6 and 7, seating grooves (17) may be formed on the outer circumferential surface of the core (10) for seating the split rolls (20), and seating protrusions (27) corresponding to the seating grooves (17) may be formed on the inner surfaces of the split rolls (20).

When the seating grooves and seating protrusions are formed as described above, it becomes possible to prevent movement of the split rolls, to fix them at accurate positions, and to prevent their longitudinal movement.

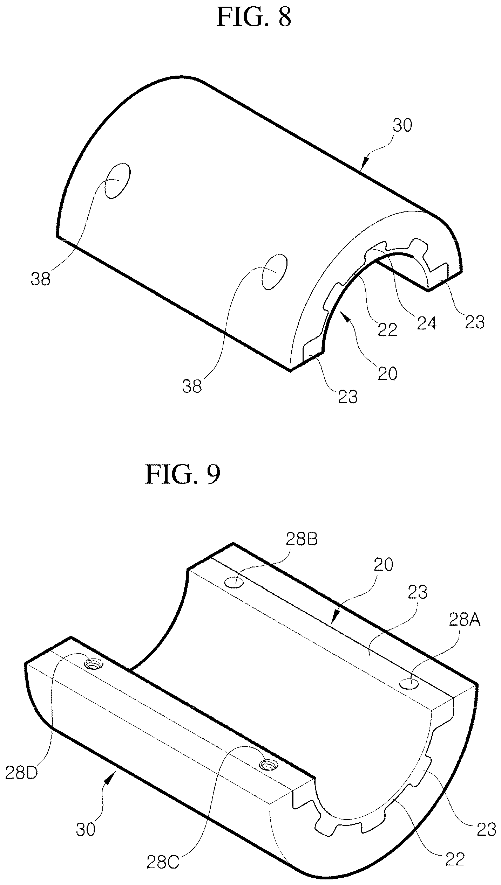

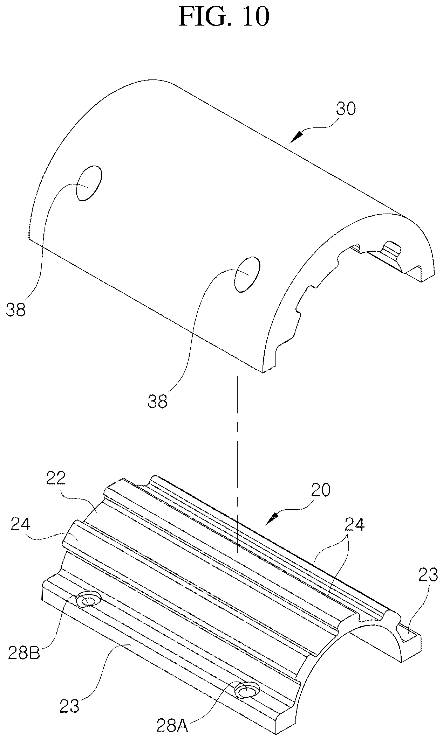

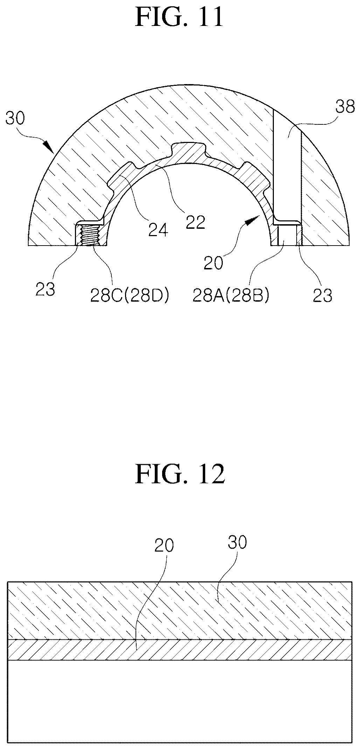

As shown in FIGS. 8 to 12, each split roll (20) comprises a body (22) formed in a semi-cylindrical shape and Flanges (23) formed to protrude outward by a predetermined width at opposite edges of the body (22).

A plurality of fastening holes (28A, 28B, 28C, 28D) for inserting fastening members (50) such as bolts are formed at intervals along the longitudinal direction of both flanges (23).

Among these fastening holes, the fastening holes (28A, 28B) formed in one flange (23) are configured as female-threaded holes.

That is, female threads are formed in the fastening holes (28A, 28B) of one flange (23).

When one pair of fastening holes (28A, 28B) in one flange (23) are formed as female-threaded holes in this manner, it is possible to manufacture a large number of split rolls (20) with the same shape and assemble them in an up-and-down facing arrangement, thereby reducing manufacturing costs, eliminating the need to use nuts when assembling a pair of split rolls (20) face to face, enabling the heads of the fastening members (50) to be symmetrically arranged so that the overall weight balance can be easily maintained, and preventing eccentricity or vibration.

The outer circumferential surface of the split rolls (20) may be further formed with longitudinal reinforcing protrusions (24).

The longitudinal reinforcing protrusions (24) are formed at intervals around the outer circumference of the body (22) of the split rolls (20).

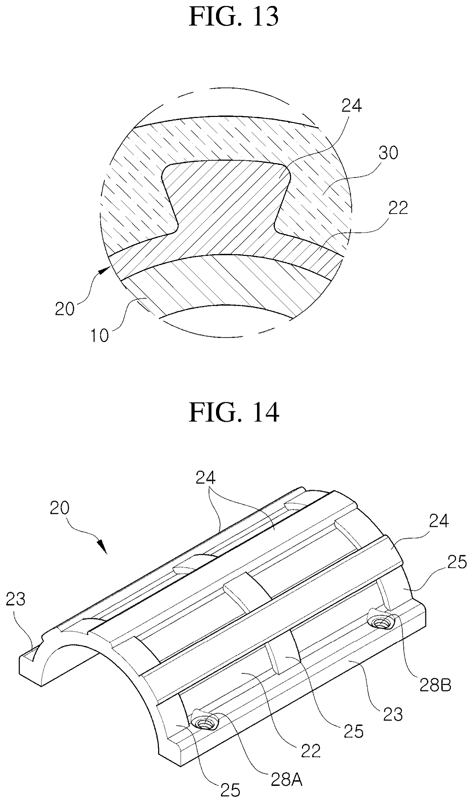

As shown in FIG. 13, when the longitudinal reinforcing protrusions (24) are formed so that their cross-sectional shape becomes wider toward the outside (outer circumferential surface), it is possible to improve the bonding strength with the rubber cover (30) and to more effectively prevent the rubber cover (30) from being separated from the split rolls (20).

For example, the longitudinal reinforcing protrusions (24) may be formed to have a substantially inverted trapezoidal cross-sectional shape.

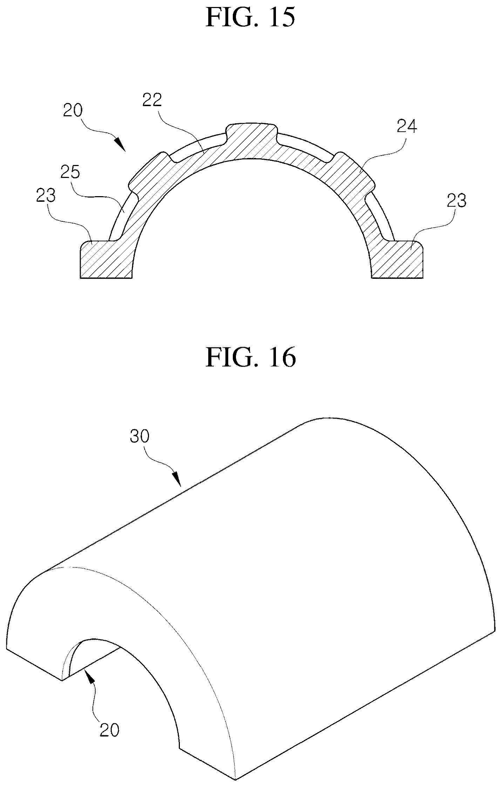

As shown in FIGS. 14 and 15, the outer circumferential surface of the split rolls (20) may further be formed with a plurality of transverse reinforcing protrusions (25) extending in a direction crossing the longitudinal reinforcing protrusions (24).

That is, a plurality of transverse reinforcing protrusions (25) may be formed circumferentially on the outer surface of the body (22) of the split rolls (20).

The transverse reinforcing protrusions (25) may be formed so as to protrude lower than the longitudinal reinforcing protrusions (24).

When two transverse reinforcing protrusions (25) are formed, they are provided at both longitudinal ends of the body (22).

When three or more transverse reinforcing protrusions (25) are formed, they may be provided at both longitudinal ends and the middle portion of the body (22).

By forming the longitudinal reinforcing protrusions (24) and/or the transverse reinforcing protrusions (25) in this manner, it becomes possible to reduce the overall weight of the split rolls (20) while sufficiently maintaining their structural and mechanical strength.

Further, by forming the longitudinal reinforcing protrusions (24) as described above, it becomes possible to form the rubber cover (30) with a greater thickness, thereby increasing the elasticity of the rubber cover (30).

In addition, it is possible to enhance the bonding strength between the split rolls (20) and the rubber covers (30) and to prevent the rubber covers (30) from lifting or being deformed.

The rubber covers (30) are formed of urethane rubber, synthetic resin, or the like, and are formed to surround the outer circumferential surfaces of the plurality of split rolls (20) and to be integrally combined and fixed thereto.

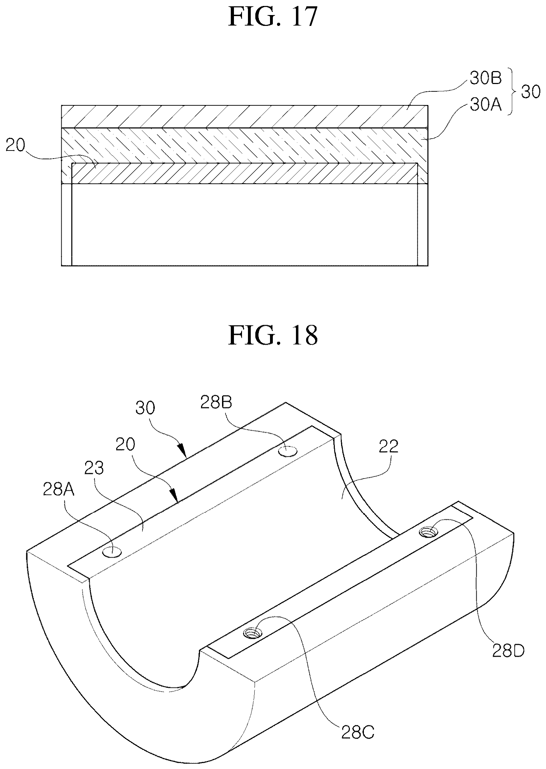

As shown in FIGS. 16 to 18, the rubber covers (30) may be formed to surround the outer circumferential surfaces and both side surfaces of the split rolls (20) and to be integrally combined and fixed thereto.

When the rubber covers (30) are formed to surround the side surfaces of the split rolls (20), it is also possible to form the rubber covers (30) to surround only the outer side surfaces in the longitudinal direction of the split rolls (20) that are disposed at both longitudinal ends of the core (10).

The inner circumferential surfaces of the rubber covers (30) are formed in shapes corresponding to the outer circumferential surfaces of the split rolls (20).

The rubber covers (30) may be formed in a state of being integrally combined with the split rolls (20) by an insert injection molding method.

When the rubber covers (30) are integrally formed with the split rolls (20) by an insert injection molding method as described above, it becomes possible to increase the bonding strength between the split rolls (20) and the rubber covers (30) and to prevent the rubber covers (30) from lifting.

The rubber covers (30) may also be separately injection-molded and then bonded to the split rolls (20).

The rubber covers (30) may be further formed with fastening guide holes (38) for inserting fastening members (50) toward the fastening holes (28C, 28D) in which female threads are not formed.

That is, fastening guide holes (38) are formed in the rubber covers (30) at positions corresponding to the fastening holes (28C, 28D) formed in the other flanges (23) of the split rolls (20).

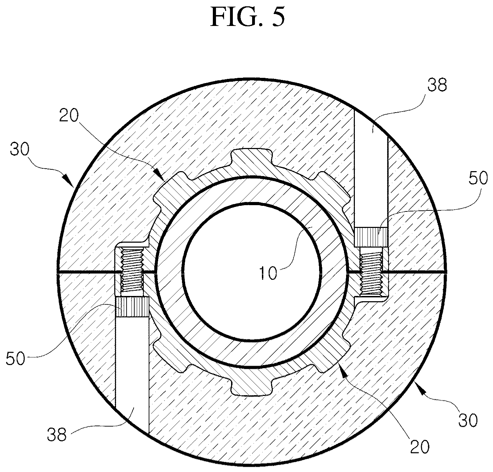

With this configuration, the rubber covers (30) are formed in a state of being integrated with the split rolls (20), and after assembling the flanges (23) of a pair of split rolls (20) face to face with the core (10) interposed therebetween, the fastening members (50) are inserted through the fastening guide holes (38), pass through the fastening holes (28C, 28D), and are fastened into the female-threaded fastening holes (28A, 28B) of the opposite split rolls (20), thereby integrally assembling and fixing the pair of split rolls (20) to the core (10) (see FIG. 5).

In addition, when partial damage or wear occurs in the rubber covers (30) requiring replacement, the pair of split rolls (20) can be disassembled by releasing the fastening members (50) through the fastening guide holes (38).

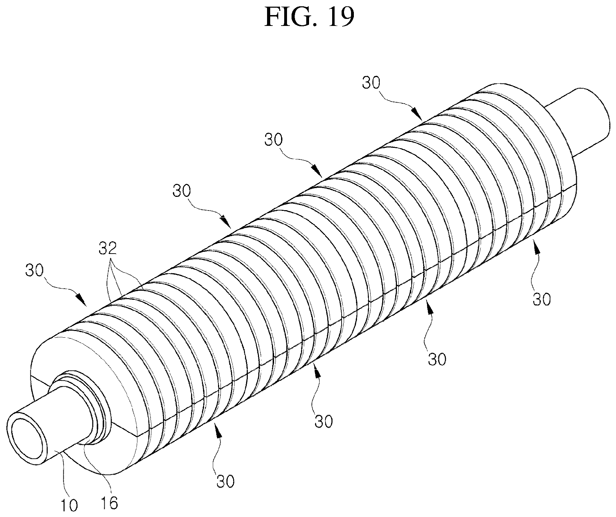

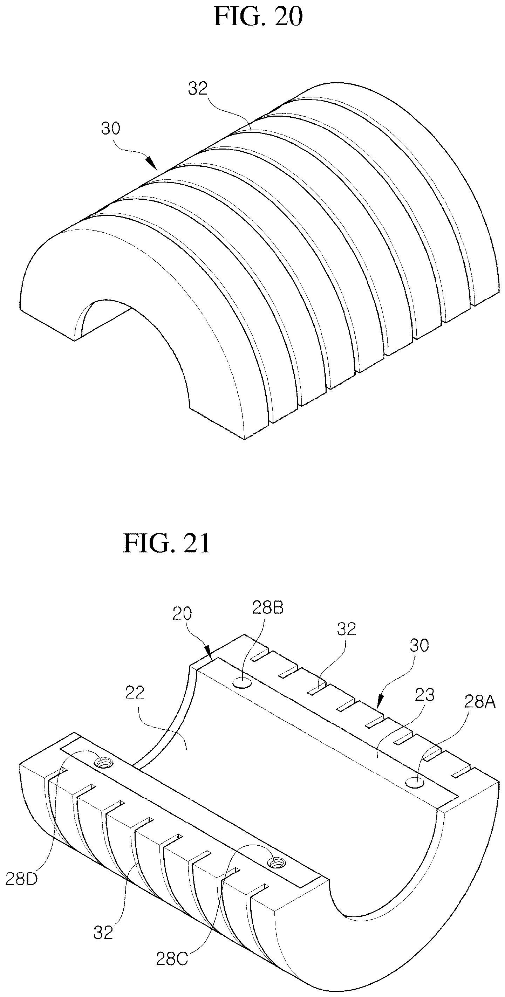

As shown in FIGS. 19 to 22, the rubber covers (30) may further be formed with grooves (32) around their outer circumferential surfaces.

The grooves (32) are formed at intervals along the longitudinal direction of the rubber covers (30).

The grooves (32) enhance the frictional force of the rubber covers (30), reduce noise, and improve elasticity.

The grooves (32) are formed with a uniform width regardless of depth.

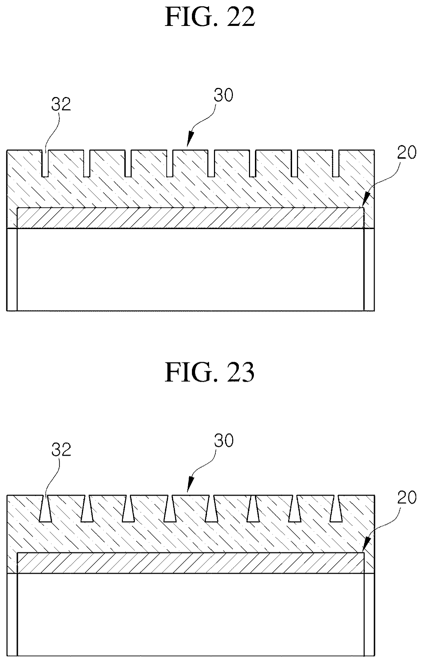

As shown in FIG. 23, the grooves (32) may be formed so that the width gradually increases as the depth increases.

For example, the grooves (32) may be formed with a substantially triangular cross-section.

By forming the grooves (32) in this manner, the ground contact area increases during corrugated board conveying, thereby improving the ground gripping force and preventing slippage.

The entrance width of the grooves (32) is preferably formed to be about 0.5 to 2 mm to prevent slippage caused by reduced contact area.

The bottom width of the grooves (32) is preferably formed to be about two to ten times larger than the entrance width.

Instead of a plurality of grooves, a plurality of protrusions may also be formed on the outer circumferential surfaces of the rubber covers (30).

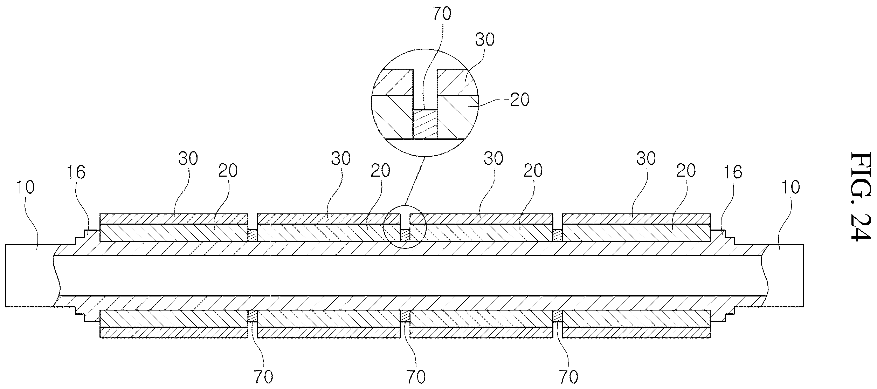

As shown in FIG. 24, in the partially replaceable rubber roll according to one embodiment of the invention, spacer rings (70) may be provided between adjacent assemblies of split rolls (20) and rubber covers (30) so that the spacing between the assemblies is maintained constant.

The spacer rings (70) are preferably configured in a separable and joinable structure of two parts so that they can be easily assembled and disassembled.

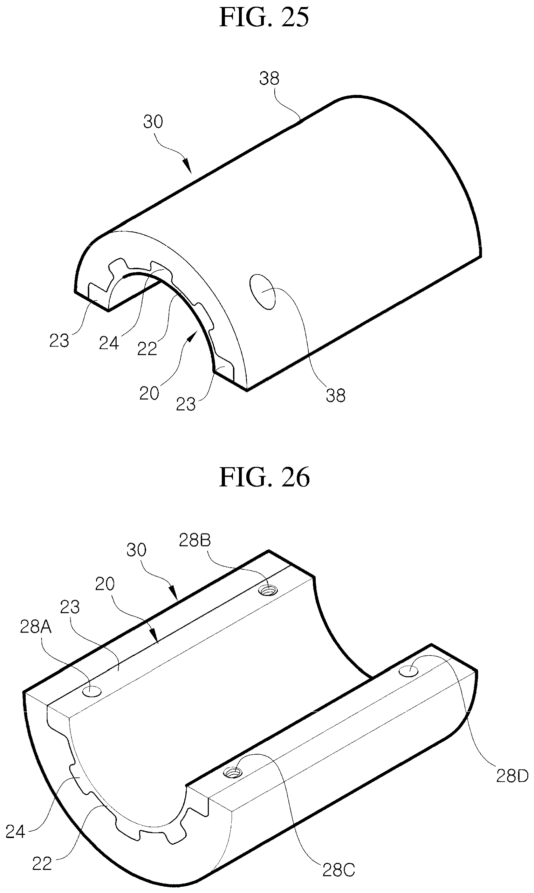

As shown in FIGS. 25 to 27, in another embodiment of the invention, the rubber covers (30) may be formed with fastening guide holes (38) corresponding to another pair of fastening holes (28A, 28D) located diagonally and symmetrically among the fastening holes (28A, 28B, 28C, 28D), that is, the fastening holes (28A, 28D) without female threads.

With this configuration, the rubber covers (30) are formed in a state of being integrated with the split rolls (20), and after assembling the flanges (23) of a pair of split rolls (20) face to face with the core (10) interposed therebetween, the fastening members (50) are inserted through the fastening guide holes (38), pass through the fastening holes (28A, 28D), and are fastened into the female-threaded fastening holes (28B, 28C) of the opposite split rolls (20), thereby integrally assembling and fixing the pair of split rolls (20) to the core (10).

In addition, when partial damage or wear occurs in the rubber covers (30) requiring replacement, the pair of split rolls (20) can be disassembled by releasing the fastening members (50) through the fastening guide holes (38).

Apart from the above configuration, the partially replaceable rubber roll of another embodiment may be implemented with the same configuration as that of the above-described embodiment.

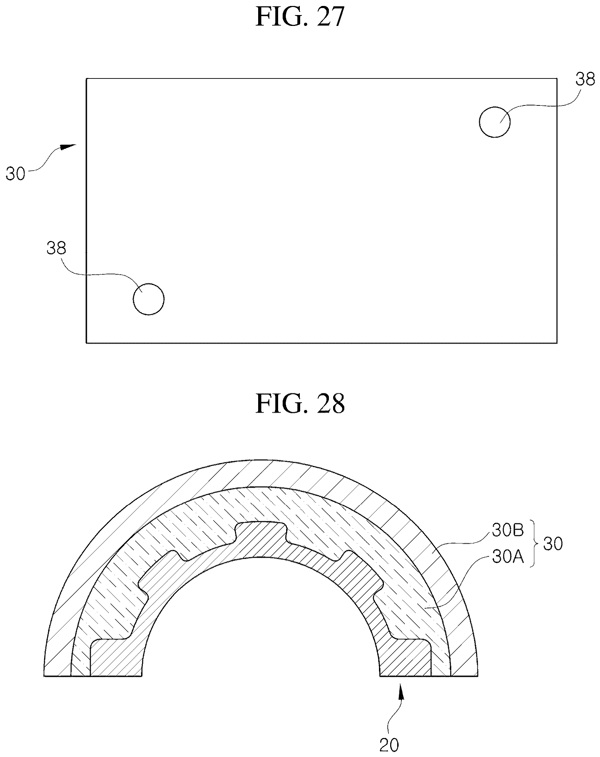

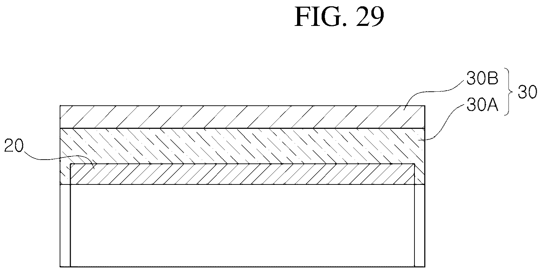

As shown in FIGS. 28 and 29, in still another embodiment of the invention, the rubber covers (30) are formed such that an inner layer of a certain thickness is formed with a lower hardness than the remaining thickness.

That is, the rubber covers (30) comprise an inner cover (30A) that surrounds the outer circumferential surfaces of the split rolls (20) with a predetermined thickness, and an outer cover (30B) that surrounds the outer circumferential surfaces of the inner cover (30A) with a predetermined thickness, wherein the hardness of the inner cover (30A) is lower than that of the outer cover (30B).

Here, both the inner cover (30A) and the outer cover (30B) may be made of urethane rubber.

The inner cover (30A) can increase elasticity by being formed with a lower hardness than the outer cover (30B) or conventional rubber rolls.

The hardness (Shore hardness) of the inner cover is preferably about Hs 20 to 50 so that it can be firmly fixed to the core (10).

The hardness (Shore hardness) of the outer cover is preferably about Hs 55 to 90 so that it can provide good friction with the conveyed object and a certain cushioning property during use.

The outer cover (30B) can increase wear resistance by being formed with a higher hardness than the inner cover (30A) or conventional rubber rolls.

Apart from the above configuration, the partially replaceable rubber roll of still another embodiment may be implemented with the same configuration as that of the above-described embodiment.

In the partially replaceable rubber roll according to the embodiments of the invention configured as described above, it is possible to easily perform partial replacement of the rubber covers (30) and the split rolls (20).

By assembling a core with assemblies of split rolls (20) and rubber covers (30) of a single structure, the number of parts is reduced, thereby improving productivity and reducing manufacturing costs.

In addition, by forming the inner and outer layers of the rubber covers with different hardness, it is possible to maintain or improve conveying pressure and increase wear resistance.

Although preferred embodiments of the partially replaceable rubber roll according to the present invention have been described, the invention is not limited thereto, and various modifications may be made within the scope of the claims, the description of the invention, and the appended drawings, all of which fall within the scope of the invention.

According to the present invention, the partially replaceable rubber roll can be installed in corrugated board manufacturing equipment, box manufacturing equipment using corrugated board, printing equipment, papermaking facilities, and the like, and can be mainly used for directly conveying objects or guiding smooth conveyance of objects.

When a defect such as wear or damage occurs in a portion of the rubber roll, the defective portion can be easily replaced, thereby reducing the time and cost required for maintenance of the rubber roll.

## Claims

1. A partially replaceable rubber roll comprising:
a core forming a rotation shaft;
a plurality of split rolls, each formed in a semi-cylindrical shape so as to cover the core in an upper and lower divided manner, the split rolls being formed in a short length so as to cover an entire length of the core in multiple sections;
a plurality of rubber covers respectively surrounding outer circumferential surfaces of the split rolls and integrally combined and fixed thereto; and
wherein each of the split rolls comprises a semi-cylindrical body and flanges formed to protrude outward by a predetermined width along opposite longitudinal edges of the body, each flange being formed with a pair of fastening holes spaced apart in a longitudinal direction and configured to allow penetration and fastening by fastening members.

2. The partially replaceable rubber roll according to claim 1, wherein the fastening holes formed in one of the opposite flanges are female-threaded holes.

3. The partially replaceable rubber roll according to claim 2, wherein an inner circumferential surface of each rubber cover is configured in a shape corresponding to an outer circumferential surface of the split roll; and wherein each rubber cover is formed with fastening guide holes configured to receive fastening members toward fastening holes of the split roll, the fastening guide holes being formed at positions corresponding to fastening holes provided in the other flange.

4. The partially replaceable rubber roll according to claim 1, wherein a plurality of longitudinal reinforcing protrusions are formed on an outer circumferential surface of the body, the longitudinal reinforcing protrusions extending in a longitudinal direction of the body.

5. The partially replaceable rubber roll according to claim 1, wherein a plurality of transverse reinforcing protrusions are formed on an outer circumferential surface of the body, the transverse reinforcing protrusions extending in a circumferential direction of the body.

6. The partially replaceable rubber roll according to claim 1, wherein a plurality of longitudinal reinforcing protrusions and a plurality of transverse reinforcing protrusions are formed on an outer circumferential surface of the body in directions crossing each other, the longitudinal reinforcing protrusions extending in a longitudinal direction of the body, and the transverse reinforcing protrusions extending in a circumferential direction of the body.

7. The partially replaceable rubber roll according to claim 1, wherein an inner layer of each rubber cover having a predetermined thickness has a lower hardness than a remaining thickness of the rubber cover.
